# FASCICULE DE BREVET EUROPEEN

(11) **EP 2 344 754 B1**
(45) Date de publication et mention de la délivrance du brevet: **14.11.2012**
(21) Numéro de dépôt: 09783996.3
(22) Date de dépôt: 14.10.2009
(51) Int. Cl.: F03D 1/00, F03D 11/00, F03D 11/04, F03D 1/06

(54) **PALES D'ÉOLIENNES ET LEUR PROCÉDÉ DE FABRICATION ASSOCIÉ**
ROTORBLÄTTER EINER WINDTURBINE UND HERSTELLUNGSVERFAHREN DAFÜR
WINDMILL BLADES AND METHOD FOR PRODUCTION THEREOF

(30) Priorité: 23.10.2008 FR 0857213
(43) Date de publication de la demande: 20.07.2011
(73) Titulaire: Astrium SAS, 75116 Paris (FR)
(72) Inventeur: LEMAIRE, Frédéric, F-33400 Talence (FR); RAYMOND, Gérald, F-33160 Saint Medard En Jalles (FR)
(74) Mandataire: Maupilier, Didier
(86) Numéro de dépôt international: PCT/EP2009/063382
(87) Numéro de publication internationale: WO 2010/046287

(56) Documents cités:
- EP-A- 1 584 817
- EP-A- 1 878 915
- WO-A-01/48378
- US-A1- 2008 232 966
- US-B1- 6 327 957

## Description

La présente invention concerne des pales d'éoliennes et leur procédé de fabrication.

Elle concerne plus particulièrement les pales d'éoliennes et les éoliennes de grandes dimensions.

Le secteur de la génération d'énergie électrique par le moyen d'éoliennes est en croissance rapide. La recherche des économies d'échelle et l'intérêt de capter le vent à des hauteurs les plus grandes possible conduisent à la conception de machines de plus en plus grandes.

Les pales des éoliennes atteignent actuellement des dimensions supérieures à 50m, et des prototypes de plus de 75 m sont en construction. Ces pales sont l'objet de nombreuses contraintes qui conduisent à les réaliser en matériaux composites, seule façon de concilier résistance de la pale et maîtrise de sa masse.

Si la fabrication en usine de pales de ces dimensions pose des problèmes difficiles mais surmontables, leur transport vers des sites souvent éloigné des grands axes routiers se révèle souvent critique et onéreux.

Les constructeurs d'éoliennes ont donc été conduits à réaliser des pales en plusieurs morceaux, assemblée sur place après transport. L'assemblage sur place se fait soit au sol, avec des outillages de type berceaux, soit en pendulaire. Dans les deux cas, la taille des segments de pales rend l'opération délicate, compte tenu de la relative fragilité des pièces qui sont optimisées en masse, et de la qualité demandée à l'assemblage en termes de précision demandée, et de la qualité finale, qui devra résister durant la vie de l'installation aux multiples contraintes de fatigue et d'environnement.

On retiendra que divers procédés d'assemblage purement mécaniques ont été proposés et notamment les documents EP 1 584 817 A1, EP 1 878 915 A2, US2008/0069699A1 proposent diverses solutions pour réaliser la jonction de tronçons de pales séparés.

On notera qu'assembler de tels tronçons de pales reste une opération délicate, du fait du positionnement précis des tronçons de pales qu'il faut obtenir sur le site où sera utilisée l'éolienne.

La présente invention a pour but de proposer une pale d'éolienne plus simple à réaliser à partir de tronçons et prévoit pour ce faire une pale d'éolienne comportant au moins deux tronçons raccordés par au moins une charnière adaptée à replier l'un desdits tronçons sur l'autre en vue du transport de la pale et à déplier les tronçons en alignement ce qui permet de s'affranchir d'un outillage d'alignement des tronçons.

L'invention concerne en outre un procédé de réalisation de pale d'éolienne comportant au moins deux tronçons raccordés par au moins une charnière adaptée à replier l'un desdits tronçons sur l'autre pour lequel on fabrique des tronçons de pale comportant des parties de ladite au moins une charnière, on aligne lesdits tronçons longitudinalement dans leur position finale, on les assemble au moyen de ladite au moins une charnière, on replie les tronçons les uns sur les autres en vue de leur transport, on déplie les tronçons sur le site d'installation de l'éolienne recevant ladite pale et on fixe les tronçons ensembles pour monter la pale.

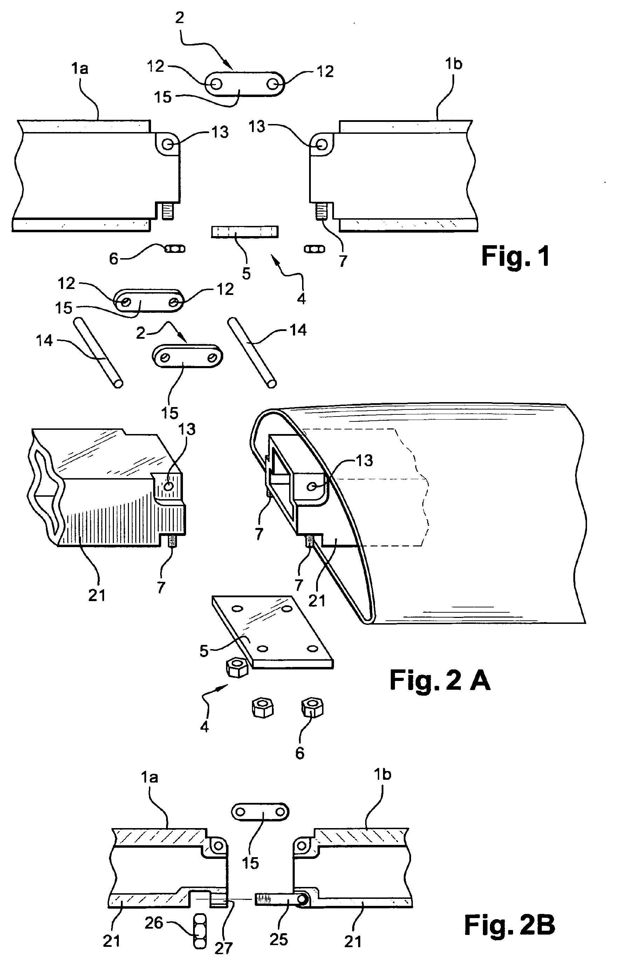

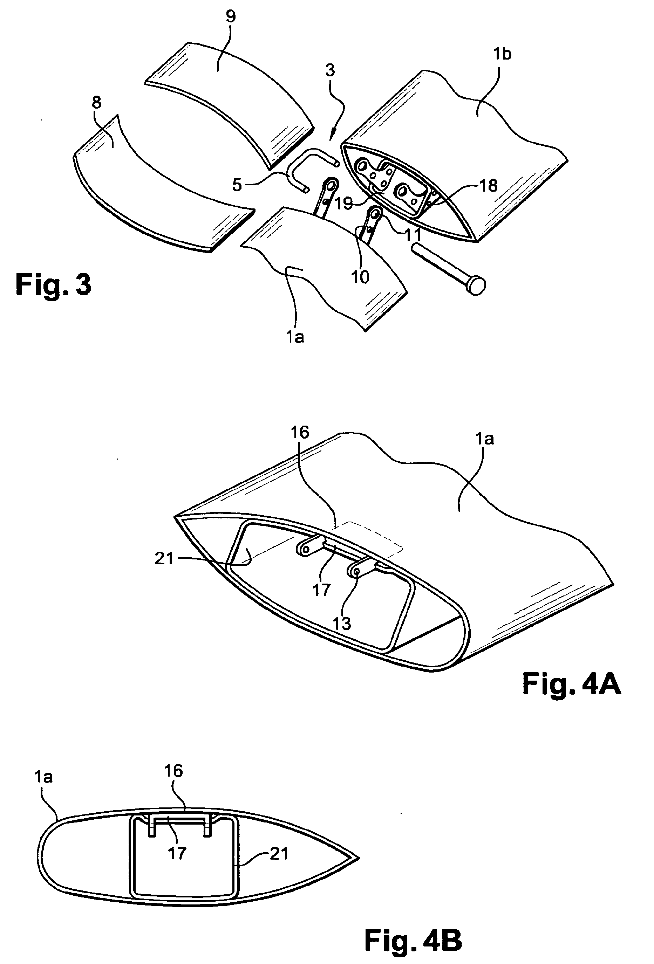

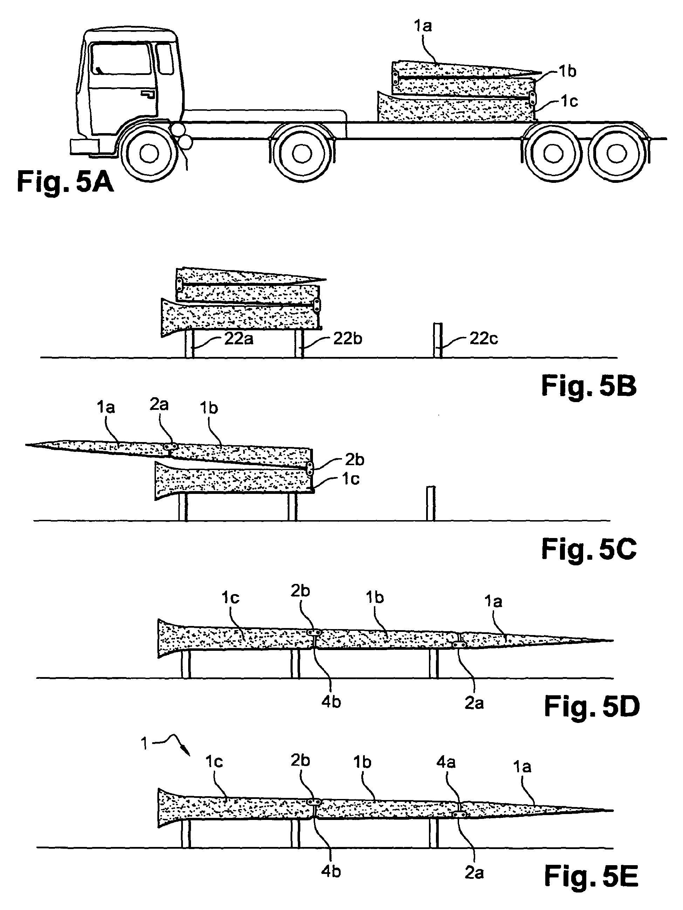

D'autres caractéristiques et avantages de l'invention seront mieux compris à la lecture de la description qui suit d'exemples de réalisation de l'invention non limitatifs en référence aux dessins qui représentent:
en figure 1: une vue de côté d'un premier exemple de réalisation d'un assemblage de tronçons de pale selon l'invention;
en figure 2A: une vue en perspective de l'assemblage de la figure 1;
en figure 2B: une vue en coupe d'une variante de moyens de fixation de la pale;
en figure 3: une vue en perspective d'un second exemple de réalisation d'assemblage de tronçons de pale selon l'invention;
aux figures 4A et 4B: des vues respectivement en perspective et de face d'une partie de tronçon recevant une partie de charnière selon une variante de réalisation de l'invention;
aux figures 5A à 5E, des vues de phases de montage d'une pale de l'invention sur site de production éolien.

La figure 1 montre une vue de côté d'un segment de pale d'éolienne selon l'invention et qui comprend deux tronçons 1a, 1b raccordés par un premier exemple de réalisation de charnière 2 adaptée à replier l'un desdits tronçons sur l'autre en vue du transport de la pale et à déplier les tronçons en alignement.

Selon cet exemple préférentiel, la charnière 2 s'inscrit dans l'encombrement de la pale.

La pale est réalisée en plusieurs tronçon en usine, ce qui limite la taille des outillages, notamment des moules qui atteignent des dimensions prohibitives dans le cas des pales monobloc.

Du fait de l'invention, la fabrication industrielle est également facilitée par le fait que les rebuts dus à défauts ne portent plus que sur des tronçons de pales mais plus sur des pales entières.

La charnière selon l'exemple représenté est une charnière double 2 comportant un maillon 15 pourvu, à chacune de ses extrémités, d'un logement 12 pour un axe de rotation 14.

L'usage d'une charnière double reposant sur un maillon pourvu d'une articulation à chacune de ses extrémité permet à la charnière de ne pas dépasser de l'encombrement de la pale ce qui est favorable au point de vue de l'aérodynamique de la pale.

Pour raccorder le maillon aux tronçons, ces derniers comportent des logements 13, de réception des axes de rotation 14 de chaque côté du maillon 15, complémentaires de ces axes.

Sur la figure 2A vue en perspective de l'assemblage de la figure 1 on voit que la charnière comporte deux maillons espacés et que les logements complémentaires recevant les axes 14 sont réalisés sur les extrémités de caissons de rigidification de la pale.

La charnière est disposée d'un côté de la pale qui comporte des moyens complémentaires 4, 5, 6, 7 de solidarisation des tronçons, tronçons dépliés en alignement.

Ces moyens complémentaires de solidarisation des tronçons comportent un tirant 4 se fixant sur une face opposée à une face des tronçons portant la charnière et des moyens de fixation 6, 7 de ce tirant sur les tronçons.

Dans le cas d'une pale en trois tronçons, les charnières et les tirants de deux tronçons successifs sont disposés sur des faces opposées pour replier la pale en accordéon.

Ici le tirant est réalisé sous forme d'une plaque pourvue de trous dans lesquels s'insèrent des goujons 7, des écrous 6 vissés sur les goujons fixant le tirant sur la face opposée.

Les axes 14 sont insérés dans les logements 12 des maillons et dans les logements 13 des caissons de rigidification de la pale. Ils peuvent être arrêtés par des goupilles ou tout autre moyen tel qu'un sertissage dans les logements des maillons.

L'exemple de la figure 2B correspond à un mode de réalisation pour lequel les tirants sont réalisés par des boulons de traction 25, 26, comprenant un axe fileté 25 articulé sur l'un des tronçons 1a, 1b et un écrou 26 reçu derrière une oreille 27 du second des tronçons.

Selon l'exemple de la figure 3, ladite au moins une charnière 3 comporte un axe de rotation 11 écarté des tronçons et des bras 10 et forme ainsi un compas.

Dans l'exemple deux charnières alignées sont présentes pour améliorer la tenue en torsion de la pale et on peut concevoir un assemblage comportant plus de deux charnières.

Dans cet exemple, les moyens complémentaires de solidarisation des tronçons sont des moyens 5 de blocage mécanique de la charnière sous forme de dispositifs de blocage en U dont les branches latérales viennent s'insérer dans des trous 20 réalisés dans les bras et distants de l'axe de rotation de la charnière.

Un tel montage ne permet toutefois pas à la charnière de rester dans l'encombrement de la pale et a pour inconvénient que la partie de charnière qui dépasse crée une perturbation aérodynamique et cause un bruit supplémentaire lors de la rotation de la pale.

Pour minimiser cet effet la pale comporte au moins un capot 8, 9 rapporté pour recouvrir la charnière. L'utilisation d'un tel capot dans le cadre de l'exemple de la figure 1 est aussi utile pour masquer les zones de passage des parties de charnières non recouvertes par la peau de la pale. Il s'agit dans ce cas l'un capot de taille réduite formant aussi peu que possible de surépaisseur par rapport à la peau de la pale.

Pour réaliser les palles de l'invention, on fabrique des tronçons 1 a, 1b, 1c par des techniques connues de réalisation de profils composites tels que le drapage ou le moulage.

On peut comme dans les exemple représentés partir d'un caisson de rigidification central 21 sur lequel seront fixées des éléments des charnières.

On fixe les ferrures des charnières sur les tronçons de façon à réaliser des tronçons de pale comportant des parties de ladite au moins une charnière 2, 3.

Ensuite, une fois que les tronçons sont réalisés, on aligne les tronçons longitudinalement dans leur position finale, on les assemble au moyen de ladite au moins une charnière en réglant les fixations de sorte que les tronçons soient correctement alignés puis on replie les tronçons les uns sur les autres en vue de leur transport.

Les charnières implantées dans le corps des segments de pales permettent donc de rassembler les tronçons et d'ajuster les charnières pour assurer un profil convenable de la pale dépliée en usine.

Les charnières sont ensuite débloquées et la pale est repliée pour transport.

La masse de la pale étant modeste eu égard à sa taille (18 tonnes environ pour une pale de 60 m), son transport demeure aisé.

Une fois sur le site d'installation de l'éolienne recevant la pale, on déplie les tronçons et on fixe les tronçons ensembles pour monter la pale.

Les figures 5A à 5E illustrent la procédure d'installation.

Le transport de la pale représenté en figure 5A se fait pale repliée, les tronçons 1a à 1c étant disposés l'un sur l'autre ce qui permet d'utiliser un camion de longueur raisonnable.

Les tronçons toujours repliés sont disposés comme représenté en figure 5B sur des éléments de bâti support 22a, 22b, 22c et dépliés selon la séquence représentée aux figures 5B à 5D.

Enfin comme représenté en figure 5E, on fixe sur les tronçons les moyens complémentaires de fixation 4a et 4b et éventuellement les capots pour terminer la pale.

Ainsi, une fois sur place, la pale est déposée sur de simples berceaux et dépliée à l'aide d'une grue de montage de l'éolienne. La position relative des segments est contrôlé par la géométrie des charnières, et donc très précise. La fixation finale des segments est assurée par des éléments mécaniques comme les boulons de traction, linguet et axes de cisaillement des moyens complémentaires de solidarisation des tronçons ou par collage structural.

Pour la fabrication des tronçons, il est possible de fabriquer les tronçons dans un même moule ce qui simplifie la procédure d'alignement des tronçons ou de fabriquer les tronçons dans des moules différents ce qui procure un gain de place.

Dans le cas où la pale est réalisée au moins en partie par drapage de matériau composite, on peut, comme représenté aux figures 4A et 4B, surdraper 16 une ferrure 17 de la charnière dans l'épaisseur de la pale.

Dans ce cas, le caisson 21 peut comporter une zone de réception de la ferrure 17 en creux pour conserver la forme aérodynamique du profil externe de la pale et éviter toute surépaisseur.

Selon un mode de réalisation alternatif représenté à la figure 3, on boulonne en 18 au moins un partie 10 de ladite charnière à des structures 19 des tronçons.

Ceci permet de terminer le moulage du tronçon avant de fixer les charnières.

Ainsi, les opérations sur site sont réduites et les différents éléments de la pale sont réglés en usine, la pale est transportée pliée, puis dépliée sur site.

Une fois dépliée, les charnières sont bloquées en position ouverte par un moyen mécanique ou un collage ce qui assure de fait un positionnement précis des différents éléments. Une fois la fixation complète, un capotage est mis en place si besoin est pour affiner le profil aérodynamique de la pale.

La réalisation décrite correspond à une pale de l'ordre de 60m constituée classiquement de deux peaux aérodynamiques, réalisées séparément par infusion sous vide en fibre de verre et résine époxy. La masse de la pale est de l'ordre de 18 tonnes.

Un longeron (spar) 21 fabriqué séparément, soit en monobloc, soit par collage de deux « oméga » est rapporté dans le moule de forme. Ce longeron a pour fonction d'apporter sa rigidité longitudinale à la pale. Il est également fabriqué par infusion en fibre de verre et résine époxy, mais peut contenir une proportion de fibre de carbone, dans un souci d'allègement. Les deux peaux et le longeron sont ensuite assemblés par collage structural au niveau du bord d'attaque, du bord de fuite et du longeron.

La réalisation en plusieurs moules séparés permet une optimisation de la production en terme de flux et de gestion des non conformités. Les charnières peuvent être intégrées sur chacun des éléments par comoulage, collage ou assemblage mécanique. Les 3 moules peuvent être utilisés comme banc de réglage des segments de pale lors du raccordement des charnières, ou le réglage peut être fait sur un banc spécifique, afin de libérer plus rapidement les moules.

Cette solution comporte toutefois une difficulté : l'obtention d'une continuité de profil aérodynamique entre les différents éléments.

Bien que moins souple en production une solution est de réaliser la pale avec un seul moule, cette solution permet de contourner les problèmes de continuité de profil.

On peut réaliser les 3 segments de pale dans un même moule en les séparant par des films, ou réaliser une pale complète et la couper aux endroits désirés après réalisation. Les charnières peuvent être intégrées dans le moule par collage pour assemblage mécanique.

L'intégration des charnières ne demande alors pas de réglage relatif des éléments de pale.

Après fabrication, la pale est repliée pour le transport, puis déployée sur site sans qu'aucun moyen de réglage ne soit nécessaire.

## Revendications

1. - Pale d'éolienne **caractérisée en ce qu'**elle comprend au moins deux tronçons (1a, 1b, 1 c) raccordés par au moins une charnière (2, 3) adaptée à replier l'un desdits tronçons sur l'autre en vue du transport de la pale et à déplier les tronçons en alignement.

2. - Pale d'éolienne selon la revendication 1 **caractérisée en ce qu'**elle comporte des moyens complémentaires (4, 5, 6, 7) de solidarisation des tronçons, tronçons dépliés en alignement.

3. - Pale d'éolienne selon la revendication 2 **caractérisée en ce que** les moyens complémentaires de solidarisation des tronçons sont des moyens (5) de blocage mécanique de la charnière.

4. - Pale d'éolienne selon la revendication 2 **caractérisée en ce que** les moyens complémentaires de solidarisation des tronçons comportent un tirant (4) se fixant sur une face opposée à une face des tronçons portant la charnière et des moyens de fixation (6, 7) de ce tirant sur les tronçons.

5. - Pale d'éolienne selon l'une quelconque des revendications 1 à 4 **caractérisée en ce que** ladite au moins une charnière (2) s'inscrit dans l'encombrement de la pale.

6. - Pale d'éolienne selon l'une des revendications 1 à 4 **caractérisée en ce que** ladite au moins une charnière (3) comporte un axe de rotation (11) écarté des tronçons et des bras (10) et forme ainsi un compas.

7. - Pale d'éolienne selon l'une quelconque des revendications 1 à 5 **caractérisée en ce que** la charnière est une charnière double (2) comportant un maillon (15) pourvu, à chacune de ses extrémités, d'un logement (12) pour un axe de rotation (14), les tronçons raccordés par le maillon comportant des logements (13) complémentaires de réception des axes de rotation (14) de chaque côté du maillon (15).

8. - Pale d'éolienne selon l'une quelconque des revendications précédentes **caractérisée en ce qu'**elle comporte au moins un capot (8, 9) rapporté pour recouvrir ladite charnière.

9. - Procédé de réalisation de pale d'éolienne selon l'une quelconque des revendications précédentes **caractérisé en ce qu'**on fabrique des tronçons (1a, 1 b, 1 c) de pale comportant des parties de ladite au moins une charnière (2, 3), on aligne lesdits tronçons longitudinalement dans leur position finale, on les assemble au moyen de ladite au moins une charnière, on replie les tronçons les uns sur les autres en vue de leur transport, on déplie les tronçons sur le site d'installation de l'éolienne recevant ladite pale et on fixe les tronçons ensembles pour monter la pale.

10. - Procédé de réalisation de pale d'éolienne selon la revendication 9 **caractérisé en ce qu'**on fabrique les tronçons dans un même moule.

11. - Procédé de réalisation de pale d'éolienne selon la revendication 9 **caractérisé en ce qu'**on fabrique les tronçons dans des moules différents.

12. - Procédé de réalisation de pales d'éoliennes selon l'une des revendications 9 à 11 **caractérisé en ce que**, la pale étant réalisée au moins en partie par drapage de matériau composite, on surdrape (16) une ferrure (17) de la charnière dans l'épaisseur de la pale.

13. - Procédé de réalisation de pales d'éoliennes selon l'une des revendications 9 à 11 **caractérisé en ce qu'**on boulonne (18) au moins un partie (10) de ladite charnière à des structures (19) des tronçons.

## Claims

1. Wind turbine blade, **characterized in that** it comprises at least two sections (1a, 1b, 1c) connected by at least one hinge (2, 3) suitable for folding one of the said sections onto the other for the purpose of transporting the blade and suitable for unfolding the sections in alignment.

2. Wind turbine blade according to Claim 1, **characterized in that** it comprises complementary means (4, 5, 6, 7) for securing the sections, sections unfolded in alignment.

3. Wind turbine blade according to Claim 2, **characterized in that** the complementary means for securing the sections are means (5) for mechanically immobilizing the hinge.

4. Wind turbine blade according to Claim 2, **characterized in that** the complementary means for securing the sections comprise a brace (4) being attached to a face opposite to a face of the sections supporting the hinge and means (6, 7) for attaching this brace to the sections.

5. Wind turbine blade according to any one of Claims 1 to 4, **characterized in that** the said at least one hinge (2) fits within the dimension of the blade.

6. Wind turbine blade according to one of Claims 1 to 4, **characterized in that** the said at least one hinge (3) comprises a rotation spindle (11) that is at a distance from the sections and from the arms (10) and thus forms a pair of compasses.

7. Wind turbine blade according to any one of Claims 1 to 5, **characterized in that** the hinge is a double hinge (2) comprising a link (15) provided, at each of its ends, with a housing (12) for a rotation spindle (14), the sections connected by the link comprising complementary housings (13) for receiving the rotation spindles (14) on each side of the link (15).

8. Wind turbine blade according to any one of the preceding claims, **characterized in that** it comprises at least one fitted cover (8, 9) to cover the said hinge.

9. Method for producing a wind turbine blade according to any one of the preceding claims, **characterized in that** the sections (1a, 1b, 1c) of a blade comprising portions of the said at least one hinge (2, 3) are manufactured, the said sections are aligned longitudinally in their final position, and they are assembled by means of the said at least one hinge, the sections are folded onto one another for the purpose of being transported, these sections are unfolded on the wind turbine installation site receiving the said blade and the sections are attached together in order to install the blade.

10. Method for producing a wind turbine blade according to Claim 9, **characterized in that** the sections are manufactured in one and the same mould.

11. Method for producing a wind turbine blade according to Claim 9, **characterized in that** the sections are manufactured in different moulds.

12. Method for producing wind turbine blades according to one of Claims 9 to 11, **characterized in that**, since the blade is produced at least partially by drape-forming of composite material, a fitting (17) of the hinge is overmoulded (16) in the thickness of the blade.

13. Method for producing wind turbine blades according to one of Claims 9 to 11, **characterized in that** at least one portion (10) of the said hinge is bolted (18) to structures (19) of the sections.

## Patentansprüche

1. Rotorblatt einer Windkraftanlage, **dadurch gekennzeichnet, dass** es mindestens zwei Abschnitte (1a, 1b, 1c) enthält, die durch mindestens ein Scharnier (2, 3) verbunden sind, das geeignet ist, um für den Transport des Rotorblatts einen der Abschnitte auf den anderen umzuklappen und die Abschnitte zueinander fluchtend ausgerichtet aufzuklappen.

2. Rotorblatt einer Windkraftanlage nach Anspruch 1, **dadurch gekennzeichnet, dass** es komplementäre Einrichtungen (4, 5, 6, 7) zur festen Verbindung der Abschnitte aufweist, wenn die Abschnitte zueinander fluchtend ausgerichtet aufgeklappt sind.

3. Rotorblatt einer Windkraftanlage nach Anspruch 2, **dadurch gekennzeichnet, dass** die komplementären Einrichtungen zur festen Verbindung der Abschnitte Einrichtungen (5) zur mechanischen Fixierung des Scharniers sind.

4. Rotorblatt einer Windkraftanlage nach Anspruch 2, **dadurch gekennzeichnet, dass** die komplementären Einrichtungen zur festen Verbindung der Abschnitte eine Ankerplatte (4), die an einer Seite befestigt wird, die einer Seite der Abschnitte entgegengesetzt liegt, die das Scharnier trägt, und Befestigungseinrichtungen (6, 7) dieser Ankerplatte an den Abschnitten aufweisen.

5. Rotorblatt einer Windkraftanlage nach einem der Ansprüche 1 bis 4, **dadurch gekennzeichnet, dass** das mindestens eine Scharnier (2) innerhalb der Abmessungen des Rotorblatts liegt.

6. Rotorblatt einer Windkraftanlage nach einem der Ansprüche 1 bis 4, **dadurch gekennzeichnet, dass** das mindestens eine Scharnier (3) eine zu den Abschnitten beabstandete Drehachse (11) und Arme (10) aufweist und so eine Schere bildet.

7. Rotorblatt einer Windkraftanlage nach einem der Ansprüche 1 bis 5, **dadurch gekennzeichnet, dass** das Scharnier ein Doppelscharnier (2) ist, das ein Glied (15) aufweist, welches an jedem seiner Enden mit einer Aufnahme (12) für eine Drehachse (14) versehen ist, wobei die durch das Glied verbundenen Abschnitte komplementäre Aufnahmen (13) zur Aufnahme der Drehachsen (14) jeder Seite des Glieds (15) aufweisen.

8. Rotorblatt einer Windkraftanlage nach einem der vorhergehenden Ansprüche, **dadurch gekennzeichnet, dass** es mindestens eine aufgesetzte Kappe (8, 9) aufweist, um das Scharnier zu bedecken.

9. Verfahren zur Herstellung eines Rotorblatts einer Windkraftanlage nach einem der vorhergehenden Ansprüche, **dadurch gekennzeichnet, dass** Rotorblattabschnitte (1a, 1b, 1c) hergestellt werden, die Teile des mindestens einen Scharniers (2, 3) aufweisen, die Abschnitte in Längsrichtung in ihrer Endstellung fluchtend ausgerichtet werden, sie mittels des mindestens einen Scharniers zusammengebaut werden, die Abschnitte für ihren Transport aufeinander umgeklappt werden, die Abschnitte am Aufstellort der Windkraftanlage, die das Rotorblatt empfängt, aufgeklappt werden, und die Abschnitte aneinander befestigt werden, um das Rotorblatt zu montieren.

10. Verfahren zur Herstellung eines Rotorblatts einer Windkraftanlage nach Anspruch 9, **dadurch gekennzeichnet, dass** die Abschnitte im gleichen Formwerkzeug hergestellt werden.

11. Verfahren zur Herstellung eines Rotorblatts einer Windkraftanlage nach Anspruch 9, **dadurch gekennzeichnet, dass** die Abschnitte in unterschiedlichen Formwerkzeugen hergestellt werden.

12. Verfahren zur Herstellung von Rotorblättern einer Windkraftanlage nach einem der Ansprüche 9 bis 11, **dadurch gekennzeichnet, dass**, wenn das Rotorblatt zumindest zum Teil durch Streckformen eines Verbundmaterials hergestellt wird, ein Beschlag (17) des Scharniers in die Dicke des Rotorblatts überstreckgeformt wird (16).

13. Verfahren zur Herstellung von Rotorblättern einer Windkraftanlage nach einem der Ansprüche 9 bis 11, **dadurch gekennzeichnet, dass** mindestens ein Teil (10) des Scharniers an Strukturen (19) der Abschnitte verschraubt wird (18).
